# EUROPEAN PATENT APPLICATION

(11) **EP 2 447 874 A1**
(43) Date of publication of application: **02.05.2012**
(21) Application number: 11008592.5
(22) Date of filing: 26.10.2011
(51) Int. Cl.: G06F 21/00

(54) **Digital rights management (DRM) domain recommendation and selection based on a user's social graphs**

(30) Priority: 27.10.2010 US 913021
(71) Applicant: Sony Ericsson Mobile Communications AB, 221 88 Lund (SE)
(72) Inventor: Kumble, Prashanth Nayak, 214 20 Malmö (SE)
(74) Representative: Banzer, Hans-Jörg

(57) **Abstract**

A network server implements Digital Rights Management (DRM) techniques to limit or inhibit unauthorized access or usage of protected multimedia content, such as a video or a song. However, the server also allows a user who has purchased protected multimedia content to share that content with one or more other people based on the strength of the user's relationships with those people.

## Description

### FIELD OF THE INVENTION

The present invention relates generally to Digital Rights Management (DRM), and more particularly, to devices and methods that perform DRM functions based on user information obtained from Social Networks (SN).

### BACKGROUND

Digital Rights Management (DRM) is a term that describes the access technologies that are used by various interested parties (e.g., copyright holders, manufacturers, publishers, etc.) to limit access to, or inhibit the use of, protected digital content. For example, companies such as SONY, AMAZON, and APPLE, which publish multimedia content such as songs and video for consumption by the general public, utilize DRM to protect that content from being used or copied by those that do not pay for the content.

Currently, some DRM schemes operate on the notion of "domains." Specifically, a "domain" in the DRM context is defined as a set of one or more devices that are authorized to render purchased, or rented, multimedia content. That is, each device in a DRM domain shares rights to a piece of content. Thus, a user can render DRM protected content, or perform other actions on the content, on any of the devices in the DRM domain provided the user has rights to perform that action. The link between the DRM domain and the devices in the domain may be "direct" (e.g., via a device ID) or "indirect" (e.g., via a user ID).

For example, a personal computer (PC) at a user's home or place of business may be an authorized device in the "domain," as could be the user's cellular telephone or home audio device. Typically, users identify specific domains that are permitted to render certain multimedia when they purchase, or rent, the content. For example, a user purchasing a song from an on-line store will have the PC from which he/she purchased the content become an authorized device within a DRM domain. If the user wishes to add an authorized device to the domain, the user must first explicitly authorize the device with a network-based server before rendering the multimedia content on the desired device. Generally, there are a limited number of devices that a content provider will allow to be part of a DRM domain. Therefore, if the user has already authorized the allotted number of devices in the DRM domain for a given piece of multimedia content, DRM requires that the user first "de-authorize" one of the devices before authorizing another.

One of the problems with DRM is that it does not allow for the sharing of purchased or protected multimedia content in a manner that mirrors the user's interactions with others. For example, if a user desires to purchase a song and share it with a close friend or relative (i.e., allow that person to listen to the song), the user would first have to authorize a device associated with that person to be within the user's DRM domain. If the number of authorized devices in the domain for the user was already met, the user would first have to de-authorize a device before authorizing the new device. Thus, although DRM does allow users to share some content, the steps required to share that content render the implementations cumbersome for the user.

### SUMMARY

The present invention provides a method for creating a digital rights management as defined in claim 1 and a server in a communication network as defined in claim 9. The dependent claims define preferred embodiments of the invention.

The present invention implements Digital Rights Management (DRM) technologies to limit or prohibit access to protected multimedia content by unauthorized users. However, the present invention differs from the conventional applications of DRM in that the present invention provides an apparatus and method of sharing protected multimedia content with one or more of a purchaser's "friends" based on the strength of the relationship between the user and one or more contacts.

Therefore, in one embodiment, the present invention provides a method of creating a digital rights management (DRM) domain for rendering protected multimedia content. The method comprises receiving a request for protected multimedia content from a user, determining one or more social networks to which the user subscribes responsive to receiving the request, obtaining information for each of the social networks, the information identifying, within each respective social network, one or more contacts connected to the user, analyzing the information to determine one or more bins of contacts based on a strength of the connections between the user and each contact, generating a DRM domain based on the one or more bins, and assigning one or more devices associated with one or more of the contacts to the DRM domain.

In one embodiment, obtaining information for each of the social networks comprises obtaining a social graph from each identified social network, each social graph identifying, within the respective social network, the contacts and the connection each contact has to the user.

In one embodiment, obtaining information for each of the social networks further comprises obtaining the social graphs from a network-based server communicating with the identified social networks.

In one embodiment, obtaining information for each of the social networks comprises obtaining the information from the user. The social information obtained from the user identifies, within the respective social network, the contacts and the connection each contact has to the user.

In one embodiment, analyzing the information to determine one or more bins of contacts based on a strength of the connections between the user and each contact comprises generating a social graph that aggregates the information provided by a plurality of the user's social networks.

In one embodiment, the method further comprises grouping the contacts within the social graph based on the social network.

In one embodiment, grouping the contacts within the social graph comprises grouping the contacts for a given social network based on groups generated by the user for the given social network.

In one embodiment, the method further comprises grouping each contact in the social graph into a bin based on the determined strength of the connection between the user and the contact.

In one embodiment, grouping each contact into a bin comprises determining the strength of a connecting link between the contact and the user based on the relationship of the contact to the user, assigning a weight value to each connecting link based on the strength of the relationship between the user and the contact, and grouping each contact into a bin based on the assigned weight value.

In one embodiment, the present invention creates the bin to hold a contact if a bin does not already exist.

In one embodiment, grouping each contact into a bin further comprises comparing the assigned weight value of each connecting link to one or more predetermined thresholds, and grouping each contact into a corresponding bin based on the comparison.

In one embodiment, the method further comprises recommending, to the user, one or more DRM domains, the recommended one or more domains comprising the devices associated with the contacts grouped in one or more selected bins.

In one embodiment, the method further comprises selecting a device to assign to the DRM domain to render the multimedia content, wherein the selected device comprises a device associated with a contact grouped into one or more selected bins, and associating the selected device with the rights to the multimedia content.

The present invention also provides a server in a communications network. In one embodiment, the server comprises a memory to store a Digital Rights Management (DRM) application, a communications interface to communicate with one or more remote parties, and a programmable controller. The controller is programmed to receive a request for protected multimedia content from a user, determine one or more social networks to which a user subscribes responsive to receiving the request, obtain information for each of the social networks, the information identifying, within each respective social network, one or more contacts connected to the user, analyze the information to determine one or more bins of contacts based on a strength of the connections between the user and each contact, generate a DRM domain based on the one or more bins, assign one or more devices associated with one or more of the contacts to the DRM domain.

In one embodiment, the controller is further programmed to obtain a social graph from each identified social network, each social graph identifying, within the respective social network, the contacts and the connection each contact has to the user.

In one embodiment, the controller is further programmed to obtain the social graphs from a network-based server communicating with the identified social networks.

In one embodiment, the controller is further programmed to obtain the information for each of the social networks from the user. In these cases, the social information may identify, within the respective social network, the contacts and the connection each contact has to the user.

In one embodiment, the controller is further programmed to group the contacts for a given social network based on groups generated by the user for the given social network.

In one embodiment, the controller is further programmed to generate a social graph that aggregates the information provided by a plurality of the user's social networks.

In one embodiment, the controller is further programmed to group each contact in the social graph into a bin based on the determined strength of the connection between the user and the contact.

In one embodiment, to group each contact into a bin, the controller is further programmed to determine the strength of a connecting link between the contact and the user based on the relationship of the contact to the user, assign a weight value to each connecting link based on the strength of the relationship between the user and the contact, and group each contact into a bin based on the assigned weight value.

In one embodiment, the controller is further programmed to create the bin for a contact if a bin does not already exist.

In one embodiment, to group each contact into a bin, the controller is further programmed to compare the assigned weight value of each connecting link to one or more predetermined thresholds, and group each contact into a corresponding bin based on the comparison.

In one embodiment, the controller is further programmed to recommend, to the user, one or more DRM domains, the recommended domains comprising the devices associated with the contacts grouped in one or more selected bins.

In one embodiment, the controller is further programmed to select one or more devices to assign to the DRM domain to render the multimedia content, wherein the selected one or more devices comprise devices associated with one or more contacts grouped into one or more selected bins, and associate the selected one or more devices with the rights to the multimedia content.

### BRIEF DESCRIPTION OF THE DRAWINGS

Figure 1 is a block diagram illustrating a communication network that allows the sharing of protected multimedia content according to a conventional DRM implementation.

Figure 2 is a graph that illustrates a user's contacts their connections to the user.

Figure 3 is a graph that illustrates a user's contacts distributed throughout a plurality of SNs, and how those contacts are organized to show the connections to the user according to one embodiment of the present invention.

Figure 4 is a block diagram illustrating a communication network that allows the sharing of protected multimedia content according to one embodiment of the present invention.

Figure 5 is a flow chart illustrating a method of authorizing desired users to access protected multimedia content according to one embodiment of the present invention.

Figure 6 is a flow chart illustrating a method of grouping a user's contacts based on the strength of their relationship with the user.

Figure 7 is a block diagram illustrating an exemplary network server configured to function according to one embodiment of the present invention.

### DETAILED DESCRIPTION

The present invention provides an apparatus and method that allows a user who has purchased protected multimedia content, such as a copyrighted song or video, to share that content with one or more other people based on the strength of the user's relationships with those one or more other people. More particularly, the present invention implements DRM to limit or inhibit protected content purchased by the user, as is conventional, but redefines the process by which the user can share that content with others.

Conventional DRM implementations require users to manually identify the particular devices that are authorized to render purchased content. However, this is problematic. Often times, users do not know the identities of their friends' devices on which they wish to render the content. This is especially true where the devices are not easily accessible, such as when the desired devices belong to other friends or are at other locations. The present invention addresses this by obtaining information about the relationships the user has with other people from one or more of the user's Social Network(s) (SNs). This information is then analyzed to determine the strength of the different relationships that the user has with these other people. Based on the results of this analysis, the present invention recommends and/or selects one or more groups of "friends" with whom the end user would likely share the purchased content.

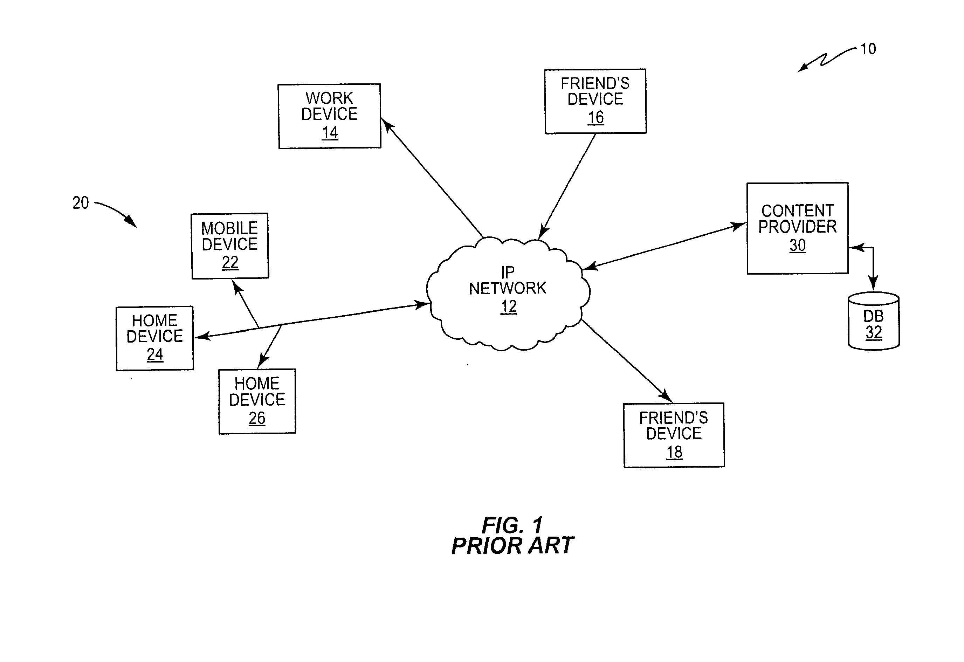

Turning now to the drawings, Figure 1 is a block diagram illustrating a prior art system in which a content provider implements the current DRM to allow an end user to purchase or rent multimedia content, and then share that content with others. More particularly, a network 10 comprises an Internet Protocol (IP) based network 12 (e.g., the Internet) that communicatively connects a work device 14 associated with the end user, and one or more friends devices 16, 18, with a home-based network 20 of the end user. As seen in Figure 1, the end user's home-based network 20 may itself comprise a plurality of devices, such as the user's mobile device 22 and one or more other devices, such as one or more personal computers (PCs) located at the user's home. Any of these devices may comprise, for example, a PC, a cellular telephone, a media playback device, or some other consumer electronic device suitable for rendering multimedia content, such as an iPOD, an iPOD TOUCH, or an iPAD, for example. Each device may be uniquely identified by any method known in the art. For example, devices can be identified using a unique IP address, SIP address, or device ID, or may be provided with a name or label that translates to a unique address or identifier.

A content provider (CP) 30 is also connected to the IP Network 12 and is accessible to each of the devices 14, 16, 18, as well as to the devices in the user's home network 20. The CP 30 stores multimedia content, such as music, images, and video, in a database (DB) 32 or other storage facility. The user can purchase or rent the content from the CP 30 using a home device 22, 24, or 26, for example, and listen or watch the content on that device, or another authorized device, once the content is received from the CP 30.

The CP 30 implements DRM, and thus, allows the user to authorize one or more "domains" comprising one or more individual devices on which the purchased or rented content may be rendered. As stated above, the user who purchases or rents the content can normally authorize only a limited number of devices on which to render the content. Typically, this will include the device with which the user purchased or rented the content. However, it may be other devices as well, such as the user's work PC 14, or a friend's device 16, 18.

As previously stated, conventional implementations of DRM, such as that seen in Figure 1, adequately limit access to protected content. However, it does not allow user to easily share the DRM protected content with other people in a manner that reflects the user's relationships with those people. Particularly, users would likely share purchased or rented content with one or more people that are close to them (i.e., close friends and family), but the current implementation of DRM makes it difficult and cumbersome to define the devices on which those people would render the content as authorized domains. Therefore, the present invention implements DRM with a focus on the user's defined relationships with other people. More particularly, the present invention obtains social graphs available from one or more of the user's social networks to obtain information regarding the relationships between the user and other people. The present invention then uses this information to determine which devices the user would likely authorize to render purchased content.

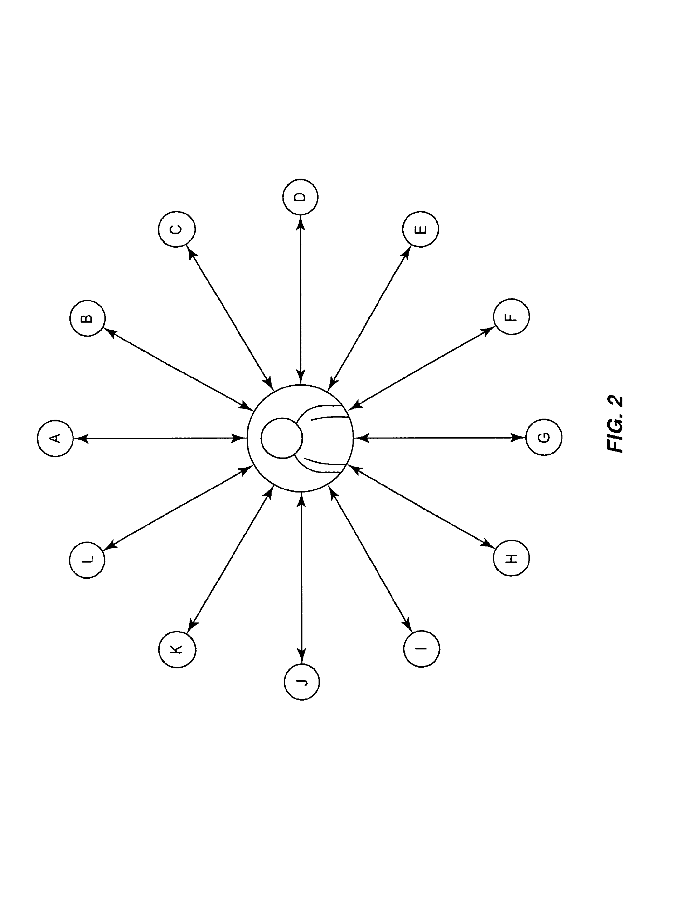

Figure 2 illustrates a social graph for a particular user. Social graphs are digital representations of the relationships between individual users and the people and things they are connected to online. Social networks such as FACEBOOK, MYSPACE, TWITTER, and LINKED IN, for example, use social graphs to represent how their respective subscribers are connected to one another. Social graphs can be built manually, as is done in FACEBOOK and TWITTER, or automatically using software such as the GOOGLE SOCIAL GRAPH API or OPEN GRAPH PROTOCOL.

Generally, relationships are defined by the people, places, experiences, and/or things that are common between two or more people, or that connect two or more people together. For example, social graph seen in Figure 2 graphically illustrates a user, represented by the node at the center of the graph, and the "friends" and things that the end user is connected to, which are represented by the nodes labeled A-L surrounding the user. Some of the nodes represent people to which the end user is connected, while others may represent "things" to which the user is connected. An example of a "thing" could be a web page or blog that the user regularly visits, indicated here by node B. The lines between the user node and the surrounding nodes indicate the type of relationship that exists between the user and that particular person or thing.

Relationships may be "symmetric" or "asymmetric." A symmetric relationship is one where both subscribers (i.e., the user and another person on the same social network) are required to acknowledge the relationship. For example, in FACEBOOK, two people cannot become online "friends" unless one subscriber accepts the other subscriber's "friend request." Once accepted, the symmetric relationship between the two subscribers is created. LINKED IN and MYSPACE require a similar process to make connections. In Figure 2, the double-headed arrows between the user node in the center and the surrounding nodes A, C, G, H, I, and L represent symmetric connections.

An asymmetric relationship, in contrast, is where only one party is needed to create the relationship. For example, in TWITTER, one subscriber can provide text-based messages called "tweets" carrying a variety of information for other subscribers to consume. These consuming subscribers are referred to as "followers." Each tweet is displayed on the subscriber's profile page and is publically visible. However, TWITTER does not require that a subscriber wishing to "follow" another's tweets first request to become a friend of the subscriber that is sending the tweets. All that is required of a "following" subscriber is that he or she registers to receive the tweets. In Figure 2, the one-headed connection lines between the user node and the nodes D, E, F, J, and K indicate asymmetric relationships. For example, the subscribers represented by nodes D, E, and F may "follow" the user's tweets, while the user may "follow" the tweets sent by the subscribers represented in nodes J and K. The connection between the user and node B, which may represent someone's blog, for example, is another example of an asymmetric relationship.

Although not required for the present invention, users will typically have many such social graphs. For example, many people subscribe to FACEBOOK to connect socially with friends and family, but subscribe to LINKED IN to connect with other professionals for work-related matters. Each of these social networks will have their own social graphs, as will TWITTER and MYSPACE. Each social graph will, as described previously, provide information regarding the relationships between the user and his or her friends. However, current social graphs are limited by the fact that they each assign different relationships the same "level of closeness." For example, for a given user, a FACEBOOK "friend" who is a family member or close relative is represented no differently than a FACEBOOK "friend" who is a casual acquaintance. That is, in FACEBOOK, a person is either a "friend" or not a "friend." There is no mechanism available to discern or describe how close one "friend" is to the user relative to other "friends." There is also no manner in which to indicate the type of "friend" a person might be to the user (e.g., whether the person is a neighborhood friend or a workplace friend, etc.).

The present invention therefore obtains this information, and then utilizes the information to implement DRM. Specifically, the information allows a server or other network entity implementing DRM to limit or inhibit access to protected material, while recommending or selecting domains that closely reflect the strength or closeness of a user's relationships with one or more other people.

In one embodiment, for example, the server associated with a content provider, such as CP 30, aggregates the data available from one or more social graphs. The server then analyzes that data to determine the strength of the connecting links that connect the user to other people in the graph. Based on the determined strength of the connections to the user, the server groups the other people into an arbitrary number of bins and then recommends or selects certain bins as DRM domains to the user.

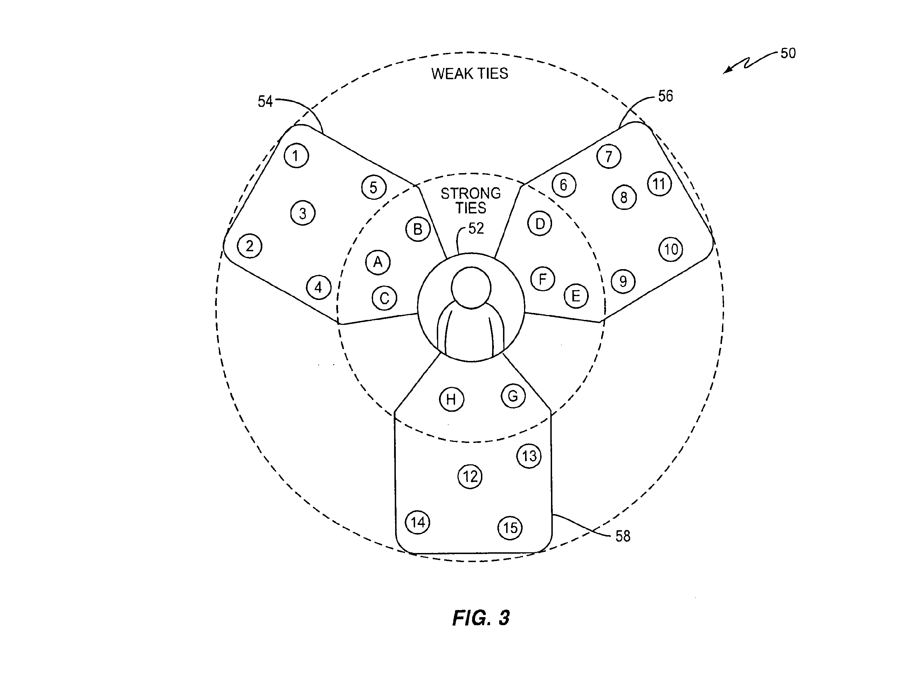

Figure 3 illustrates a social graph 50 containing the aggregated information available from a plurality of other social graphs provided by different social networks. As seen in Figure 3, the user 52, seen at the center of social graph 50, belongs to a plurality of different social networks 54, 56, 58. These may be, for example, FACEBOOK, LINKED IN, and TWITTER. Each social network 54, 56, 58 has its own set of subscribers or contacts that are connected to the user 52 in some way. These subscribers or contacts are indicated in Figure 3 as nodes A-H and nodes 1-15.

In one embodiment of the present invention, the CP 30 generates graph 50. Particularly, CP 30 might first obtain the individual social graphs either directly from the social network servers, or from providers that obtain the social graphs from the social networks servers. The CP 30 then organizes the contacts based on the "strength" of their connecting links. As used herein, the "strength" of a connecting link is a hierarchical indicator of how "close" a contact is to a user. For example, relatives such as brothers, sisters, cousins, etc., as well as certain other individuals such as lifelong friends, may be "closer" to a user than are work acquaintances or neighbors. Thus, contacts belonging to the former group would have "stronger" relationship ties or connecting links to the user than would those of the latter group. Similarly, friends from work or school may be closer to the user than are casual acquaintances the user met at a party or other event. Further, within such groups, some contacts may have stronger ties to the user than other contacts of the same group. By way of example, a user may have some friends who he/she is "closer" to than others.

Therefore, in one embodiment, the CP 30 assigns a weight value to a given connecting link to quantify the strength of the relationship it represents based on a variety of different factors. Those contacts having a connecting link with a higher weight value may be deemed to be "closer" than those that do not. Those contacts having a connecting link with a weight higher than a predetermined threshold (e.g., nodes A-H) could be considered as having "strong ties" to the user, while those having connecting links with weights lower than the predetermined threshold (e.g., nodes 1-15) could be considered as having "weak ties" to the user.

The factors on which the server determines the strength of a relationship include, but are not limited to, whether the contact is related to the user, how long the contact has known the user, whether a given contact appears in more than one of the user's social graphs (i.e., is common to multiple graphs), whether the contact and the user visit the same web sites (e.g., a blog or vblog), whether or how often one sends messages to the other (e.g., how often one writes on the other's "wall," or communicates messages to the other), how often one visits the other's profile page or views the other's pictures, and how often one end user "tags" or identifies another on his or her profile page. This information could be provided by the social network in the nodes of the social graph, and/or it could be provided manually by the user or contact, and/or it could be derived by CP 30 based on some historical data collected over time.

Once organized, the CP 30 may group the contacts into bins based on the strength of the connecting links. For example, given graph 50, the CP 30 may group the contacts represented by nodes A-C in a first bin and the contacts represented by nodes D-F in a second bin. The contacts represented by nodes G and H, for example could be grouped into a third bin. Similarly, the contacts represented by nodes 1-15 may be placed in an additional set of one or more bins based on the weights of their connecting links. The number of bins created to hold the contacts, as well as the number of contacts placed within each bin, is arbitrary. The CP 30 can then recommend to the user that the devices associated with the contacts in a particular bin be utilized as DRM domains, or select a particular bin and automatically set the DRM domains to be the devices associated with the contacts in the selected bin. As stated above, each device may be uniquely identified using an IP or SIP address, a device ID, or may be assigned a label or device name that translates to a unique address. According to one embodiment of the present invention, these unique addresses may be used for authorizing specific devices as part of a DRM domain.

In some cases, there may be an imposed limit on the number of domains that the CP 30 or the user can create. In such cases, CP 30 would set no more than the maximum number of DRM domains. Users wishing to have more than the allotted number of domains could do so, but at a price that is decided, for example, by the content provider.

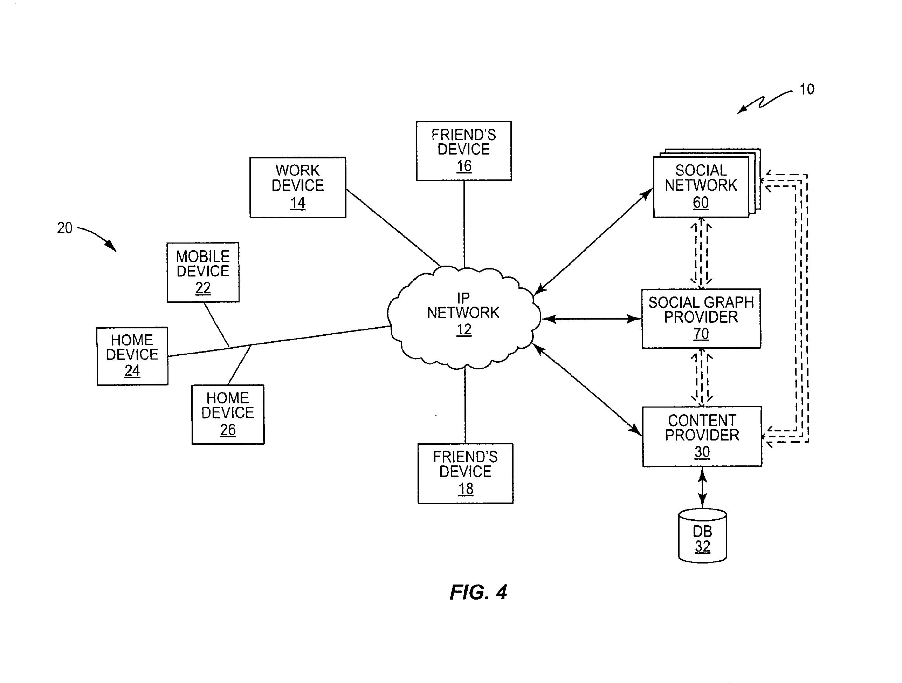

Figure 4 is a block diagram illustrating a network architecture by which CP 30 may perform the functions of the present invention. As seen in Figure 4, the IP network 12 interconnects one or more different devices 14, 16, 18, and 20. Each device could be selected or recommended for use as a member of a DRM domain based on the strengths of the connecting links between the user 52 and the contacts associated with the respective devices 14, 16, 18, and 20. The CP 30, seen in Figure 4, is configured to perform these functions. Specifically, the CP 30 is communicatively connected to the server(s) 60 of one or more social networks (e.g., FACEBOOK, TWITTER, LINKED IN, MYSPACE, etc.). CP 30 may query the servers 60 to obtain the social graphs of a given end user, and then process those social graphs as previously described to group the contacts into bins based on the determined strengths of the connecting links. In another embodiment, CP 30 may request the social graphs from a third party social graph provider 70. The function of this provider 70 would be to obtain the social graphs from the social network servers 60, and provide the CP 30 with either the social graph 50 seen in Figure 3, for example, or with the raw data such that the CP 30 can extrapolate the information about the connections.

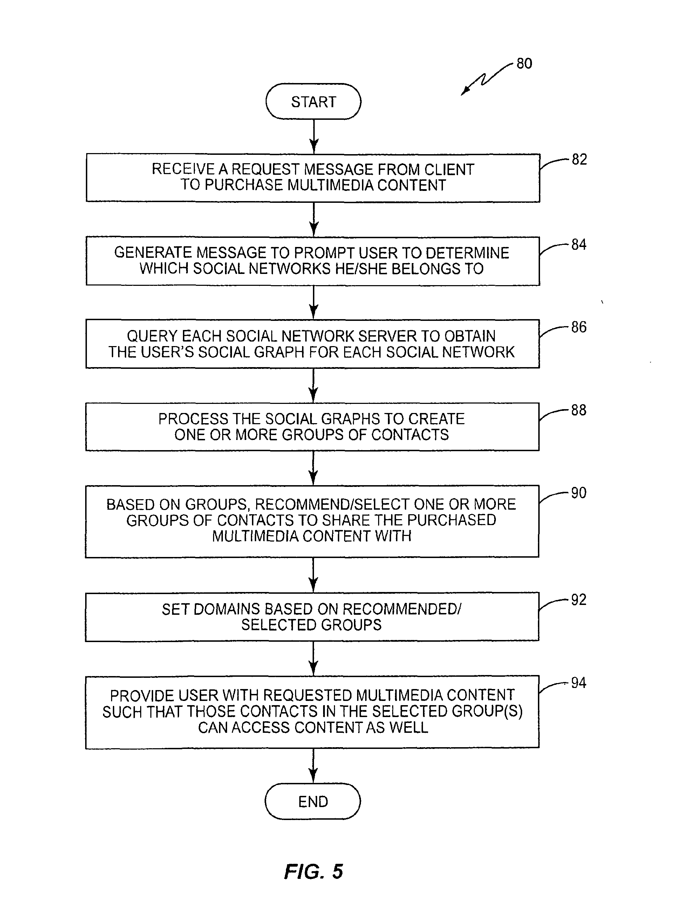

Figure 5 is a flow diagram illustrating a method 80 of recommending or selecting devices for inclusion in a DRM domain to a user based on the strengths of the connecting links the user has with one or more other contacts. The method 80, as described here, is performed by the CP 30 server. Additionally, the method 80 and Figure 5 are described in terms of the purchase of multimedia content. However, this is for illustrative purposes only. Those skilled in the art will readily appreciate that method 80 may be performed by other entities within the network, and may be used to rent multimedia content (e.g., a movie) rather than to purchase the content. Additionally, some or all of the information regarding the user's contacts and/or social networks may be manually provided by the user when the user originally registers for a service that employs the present invention.

Method 80 begins when the CP 30 receives a request message from a client device (i.e., a user) to purchase multimedia content (box 82). For example, the user may wish to purchase a song. In response to receiving the request, the CP 30 generates a message to send to the user prompting him/her to identify the social networks he/she belongs to (box 84). The user would respond by identifying the social networks and, upon receipt, the CP 30 would generate and send a query to each social network server 60 identified by the user to obtain each social graph (box 86). The CP 30 would then process the social graphs to create one or more groups of contacts (box 88). Additionally or alternatively, the user may have also manually created one or more groups of contacts within one or more social networks. Based on these groups, whether they are generated automatically by the CP 30 or manually by the user, CP 30 would then recommend or select certain group(s) of contacts to the user to be set as DRM domains (box 90). The CP 30 would then set the domain to include the devices associated with the people in the recommended/selected groups (box 92) and associate those devices with the appropriate rights to the multimedia content. The CP 30 would then provide the user with the requested multimedia (box 94). Since the devices in the domain would be associated with the rights to the multimedia content, the user purchasing the multimedia content could then share that content legally with the contacts that are associated with those devices in the domain.

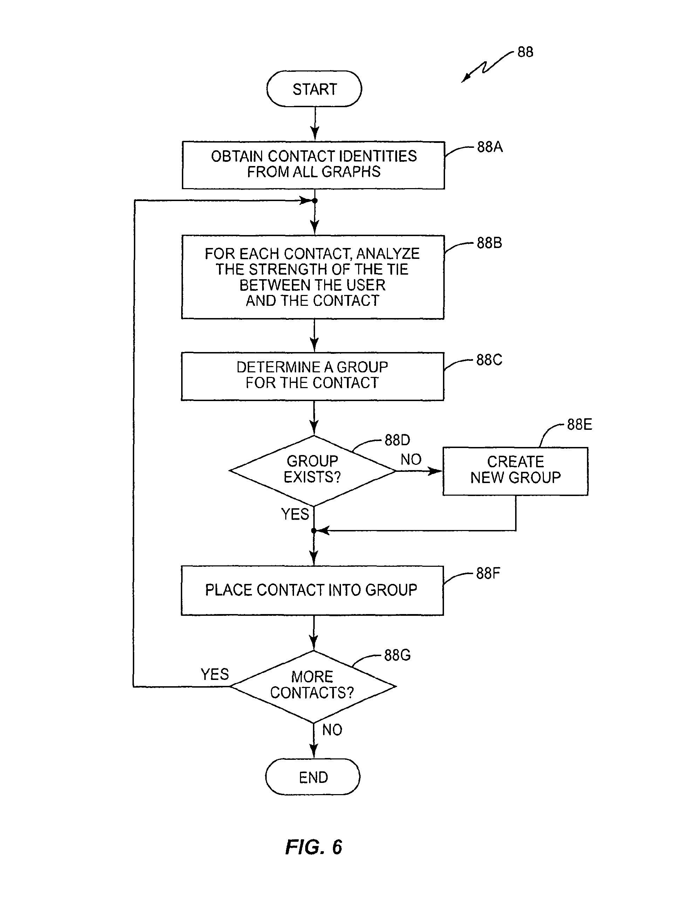

Figure 6 is a flow diagram illustrating how the present invention processes the social graph information in one embodiment. Particularly, the method further describes the processing described earlier in box 88 of Figure 5. Method 88 begins with CP 30 obtaining the identities and associated information from each of the social graphs obtained from each of the social network servers 60 (or the social graph provider 70) (box 88a). Then, CP 30 will analyze the information contained within the graphs to determine the strength of the relationships that exist between the user and the other contacts. Particularly, in one embodiment, the CP 30 analyzes, for each contact in a graph, the strength of the connecting link that connects the contact to the user (box 88b). As previously stated, the CP 30 may look at any number of factors and assign a weight to the link based on the factors. This includes information provided by the user and/or the information associated with any groups that may have been generated by the user. The CP 30 then determines which group to place the contact in based on the final weight value (box 88c). If a particular bin or group does not exist (box 88d), the CP 30 would first create a new bin or group (box 88e) before placing the contact in the bin (box 88f). Otherwise, the contact would simply be placed into the appropriate bin (box 88f). For example, those having a weight value above a predetermined threshold may be placed into a first bin while others are placed into other bins. Additionally, the CP 30 may create bins, or update bins, based on existing user-defined groups within a given social network. After placing a contact into an appropriate bin or group, the CP 30 would perform the same analysis and placement scheme for the next contact in the social graph (box 88g) until all contacts are processed.

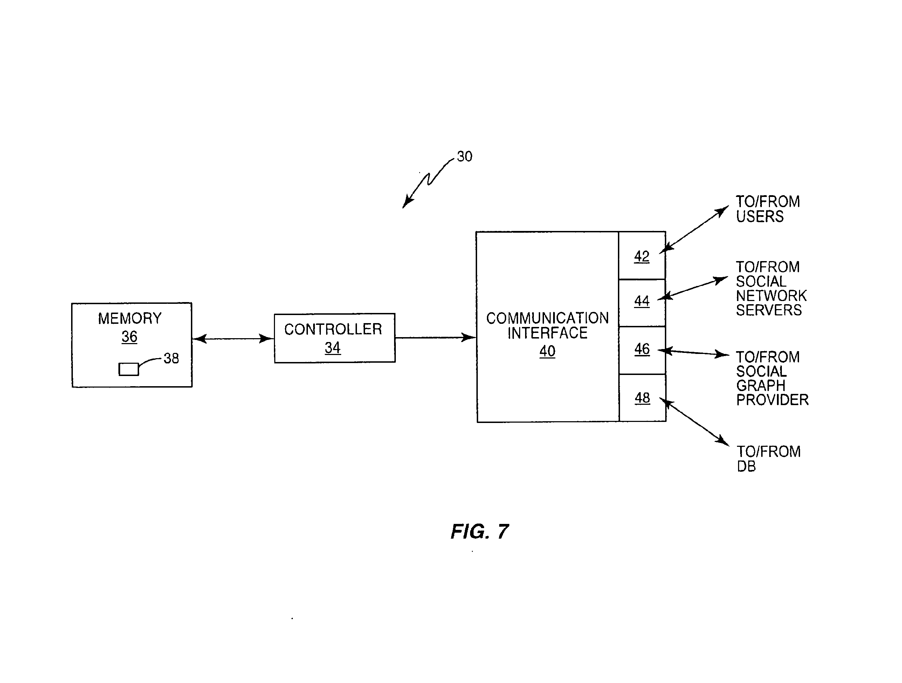

Figure 7 is a block diagram illustrating a server device at CP 30 configured to function according to one embodiment of the present invention. As seen in Figure 7, the CP 30 server device could comprise a controller 34, a memory 36, and an interface 40 that includes one or more different communication interfaces 42, 44, 46, and 48.

The controller 34 controls the operation of the CP 30 server device according to one or more programs 38 and data stored in memory 36. The controller 34 may be implemented as a single microprocessor or multiple microprocessors. Suitable microprocessors may include, for example, general purpose and special purpose microprocessors as well as digital signal processors and/or image processors. In this embodiment, the controller 34 executes program 38 to control CP 30 to obtain one or more social graphs associated with an end user from the social network servers 60, or from the social graph provider70. Program 38 also contains the instructions necessary for controller 34 to analyze the information in the social graphs to determine the strengths of the connecting links between the user and the contacts within the user's social networks. Under the control of program 38, the controller 34 groups the contacts into bins based on this analysis, and then recommends and/or selects certain bins to set as DRM domains.

Memory 36 is a computer readable medium representing the entire hierarchy of memory in the CP 30, and may comprise both random access memory (RAM) and read-only memory (ROM). Computer program instructions 38 and data required for operation of the CP 30 are stored in non-volatile memory, such as EPROM, EEPROM, and/or flash memory. Memory 36 may be implemented, for example, as one or more discrete devices, stacked devices, or removable devices, such as a flash drive or memory stick, or may be integrated with controller 34.

The interface 40 comprises the software and hardware needed to facilitate communications between the CP 30 and one or more other entities. For example, in this embodiment, the communication interface 40 is depicted as having four different ports 42-48. The first port 42 comprises a port that connects CP 30 to the end user devices (e.g., 14, 16, 18, 20) via the IP network 12. Ports 44 and 46 comprises the software and hardware required to facilitate communications between CP 30 and one or more of the social network servers 60 and the social graph providers 70, respectively. Port 48 comprises the software and hardware necessary to facilitate communications between the CP 30 and the DB 32, where the multimedia content may be stored for retrieval.

The present invention may, of course, be carried out in other ways than those specifically set forth herein without departing from essential characteristics of the invention. For example, the present invention may be used in a DRM implementation for any type of protected content. Further, the user may alter or change the authorized domains at any time. By way of example, the user may be presented with recommended domains based on the social graph data analysis, but the user has the ability to select or change which groups get set as authorized domains.

Additionally, the user may label certain domains as "default" domains. For example, the CP 30 may recommend the devices of system 20 to the user. The recommendation would be based, for example, on information that the social graph has indicating that those devices belong to, or are associated with, the user (e.g., the social networks could monitor or track which devices the user employs to access the social networks, and provide that information with the graph). The user may select one or more of these devices of home system 20 to be included in a "default" domain such that the CP 30 will set this domain as the authorized device(s) absent any changes or selections by the user. Therefore, the present embodiments are to be considered in all respects as illustrative and not restrictive, and all changes coming within the meaning and equivalency range of the appended claims are intended to be embraced therein.

## Claims

1. A method of creating a digital rights management (DRM) domain for rendering protected multimedia content, the method comprising:
receiving a request for protected multimedia content from a user (52);
determining one or more social networks (54, 56, 58; 60) to which the user (52) subscribes responsive to receiving the request;
obtaining information for each of the social networks (54, 56, 58; 60), the information identifying, within each respective social network (54, 56, 58; 60), one or more contacts connected to the user (52);
analyzing the information to determine one or more bins of contacts based on a
strength of the connections between the user (52) and each contact; generating a DRM domain based on the one or more bins; and
assigning one or more devices (14, 16, 18) associated with one or more of the
contacts to the DRM domain.

2. The method of claim 1 wherein obtaining information for each of the social networks (54, 56, 58; 60) comprises obtaining a social graph (50; 70) from each identified social network (54, 56, 58; 60), each social graph (50; 70) identifying, within the respective social network (54, 56, 58; 60), the contacts and the connection each contact has to the user (52).

3. The method of claim 2 wherein obtaining information for each of the social networks (54, 56, 58; 60) further comprises obtaining the social graphs (50; 70) from a network-based server (60) communicating with the identified social networks (54, 56, 58; 60).

4. The method of any one of claims 1-3 wherein obtaining information for each of the social networks (54, 56, 58; 60) comprises obtaining the information from the user (52), the social information identifying, within the respective social network (54, 56, 58; 60), the contacts and the connection each contact has to the user (52).

5. The method of any one of claims 1-4 wherein analyzing the information to determine one or more bins of contacts based on a strength of the connections between the user (52) and each contact comprises generating a social graph (50; 70) that aggregates the information provided by a plurality of the user's (52) social networks (54, 56, 58; 60), and further comprising grouping the contacts within the social graph (50; 70) based on the social network (54, 56, 58; 60).

6. The method of any one of claims 1-5 wherein analyzing the information to determine one or more bins of contacts based on a strength of the connections between the user (52) and each contact comprises generating a social graph (50; 70) that aggregates the information provided by a plurality of the user's (52) social networks (54, 56, 58; 60), and further comprising grouping each contact in the social graph (50; 70) into a bin based on the determined strength of the connection between the user (52) and the contact.

7. The method of any one of claims 1-6 further comprising recommending, to the user (52), one or more DRM domains, the recommended one or more domains comprising the devices associated with the contacts grouped in one or more selected bins.

8. The method of any one of claims 1-7 further comprising:
selecting a device to assign to the DRM domain to render the multimedia content, wherein the selected device comprises a device associated with a contact grouped into one or more selected bins; and
associating the selected device with the rights to the multimedia content.

9. A server (30) in a communications network, the server (30) comprising:
a memory (36) to store a Digital Rights Management (DRM) application;
a communications interface (40) to communicate with one or more remote parties; and
a programmable controller (34) programmed to:
receive a request for protected multimedia content from a user (52);
determine one or more social networks (54, 56, 58; 60) to which a user (52) subscribes responsive to receiving the request;
obtain information for each of the social networks (54, 56, 58; 60), the
information identifying, within each respective social network (54, 56, 58; 60), one or more contacts connected to the user (52);
analyze the information to determine one or more bins of contacts based
on a strength of the connections between the user (52) and each contact;
generate a DRM domain based on the one or more bins; and
assign one or more devices associated with one or more of the contacts
to the DRM domain.

10. The server (30) of claim 9 wherein the controller (34) is further programmed to obtain a social graph (50) from each identified social network (54, 56, 58; 60), each social graph (50) identifying, within the respective social network (54, 56, 58; 60), the contacts and the connection each contact has to the user (52).

11. The server (30) of any one of claims 9-10 wherein the controller (34) is further programmed to obtain the information for each of the social networks (54, 56, 58; 60) from the user (52), the social information identifying, within the respective social network (54, 56, 58; 60), the contacts and the connection each contact has to the user (52).

12. The server (30) of any one of claims 9-11 wherein the controller (34) is further programmed to group the contacts for a given social network (54, 56, 58; 60) based on user-generated groups for the given social network (54, 56, 58; 60).

13. The server (30) of any one of claims 9-12 wherein the controller (34) is further programmed to generate a social graph (50) that aggregates the information provided by a plurality of the user's social networks (54, 56, 58; 60).

14. The server (30) of any one of claims 9-13 wherein the controller (34) is further programmed to recommend, to the user (52), one or more DRM domains, the recommended domains comprising the devices associated with the contacts grouped in one or more selected bins.

15. The server (60) of any one of claims 9-14 wherein the controller (34) is further programmed to:
select one or more devices to assign to the DRM domain to render the multimedia content, wherein the selected one or more devices comprise devices associated with one or more contacts grouped into one or more selected bins; and
associate the selected one or more devices with the rights to the multimedia content.
